# EUROPEAN PATENT SPECIFICATION

(11) **EP 2 491 680 B1**
(45) Date of publication and mention of the grant of the patent: **14.03.2018**
(21) Application number: 09852159.4
(22) Date of filing: 17.12.2009
(51) Int. Cl.: H04L 12/28

(54) **METHOD AND SYSTEM FOR FACILITATING ONE-TO-MANY DATA TRANSMISSION TO A PLURALITY OF COMPUTING DEVICES**
VERFAHREN UND SYSTEM FÜR ONE-TO-MANY-DATENÜBERTRAGUNG AN MEHRERE DATENVERARBEITUNGSVORRICHTUNGEN
PROCÉDÉ ET SYSTÈME POUR FACILITER LA TRANSMISSION DE DONNÉES À ORIGINE UNIQUE ET DESTINATIONS MULTIPLES VERS UNE PLURALITÉ DE PÉRIPHÉRIQUES INFORMATIQUES

(43) Date of publication of application: 29.08.2012
(73) Proprietor: Intel Corporation, Santa Clara, CA 95054 (US)
(72) Inventor: LIPMAN, Justin, Shanghai 201103 (CN)
(74) Representative: Goddar, Heinz J.
(86) International application number: PCT/CN2009/001478
(87) International publication number: WO 2011/072421

(56) References cited:
- WO-A1-2008/046144
- JP-A- 2007 053 486
- US-A1- 2005 141 469
- US-A1- 2005 169 193
- US-A1- 2008 089 268

## Description

### BACKGROUND

Collaboration computing environments often rely on data transfer from a source computing device to multiple destination or sink computing devices. For example, in educational environments, "classroom collaboration" relies on the transfer of files, video, and other data from the teacher's computing device to each student's computing device. Typically, multicast, broadcast, or other one-to-many data transmissions are used to effect such data transfer.

Unlike multicast or broadcast transmissions, unicast transmissions are one-to-one data transmissions (i.e., from a single source computing device to a single destination or sink computing device). Some communication devices and standards are optimized for or otherwise provide better service and/or reliability with unicast transmissions compared to multicast or broadcast transmissions. For example, some access points (e.g., a wired or wireless router, switch or hub) are optimized for routing unicast transmissions. Conversely, in a multicast transmission, the access point can become a "bottleneck" of the local area network (LAN) because the access point must transmit the data received from the source computing device (usually via a unicast transmission) to each sink computing device on the local area network. In environments wherein multiple LANs are located in proximity to each other, excessive multicast or broadcast transmissions can also result in "bleeding" between the networks. Additionally, unlike unicast transmissions, many multicast transmission standards do not provide for link layer retransmission of data, which can result in poor data delivery and/or high error rates in some environments. As such, although collaboration computing environments rely on one-to-many data transmissions, typical multicast transmissions may not provide the required reliability or throughput in some implementations. Attention is drawn to the document WO 2008/046144 A1.

### BRIEF DESCRIPTION OF THE DRAWINGS

The systems, devices, and methods described herein are illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
FIG. 1 is a simplified block diagram of one embodiment of a system for facilitating one-to-many data transmissions from a source computing device to a plurality of computing devices;
FIG. 2 is a simplified block diagram of one embodiment of a computing device of the system of FIG. 1;
FIG. 3 is a simplified flow diagram of one embodiment of a method for transmitting data to a plurality of computing devices executed by the source computing device of the system of FIG. 1;
FIG. 4 is a simplified flow diagram of one embodiment of a method for receiving data from a source computing device executed by the plurality of computing devices of the system of FIG. 1; and
FIG. 5 is a simplified block diagram of another embodiment of a system for facilitating one-to-many data transmission from a source computing device to a plurality of computing devices.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the intention is to cover all modifications, equivalents, and alternatives falling within scope of the invention as defined by the appended claims.

In the following description, numerous specific details such as logic implementations, opcodes, means to specify operands, resource partitioning/sharing/duplication implementations, types and interrelationships of system components, and logic partitioning/integration choices may be set forth in order to provide a more thorough understanding of the present disclosure. It will be appreciated, however, by one skilled in the art that embodiments of the disclosure may be practiced without such specific details. In other instances, control structures, gate level circuits and full software instruction sequences may have not been shown in detail in order not to obscure the disclosure. Those of ordinary skill in the art, with the included descriptions, will be able to implement appropriate functionality without undue experimentation.

References in the specification to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Some embodiments of the disclosure may be implemented in hardware, firmware, software, or any combination thereof. Embodiments of the disclosure implemented in a computer system may include one or more bus-based interconnects between components and/or one or more point-to-point interconnects between components. Embodiments of the invention may also be implemented as instructions stored on a machine-readable, tangible medium, which may be read and executed by one or more processors. A machine-readable, tangible medium may include any tangible mechanism for storing or transmitting information in a form readable by a machine (e.g., a computing device). For example, a machine-readable, tangible medium may include read only memory (ROM); random access memory (RAM); magnetic disk storage media; optical storage media; flash memory devices; and other tangible mediums.

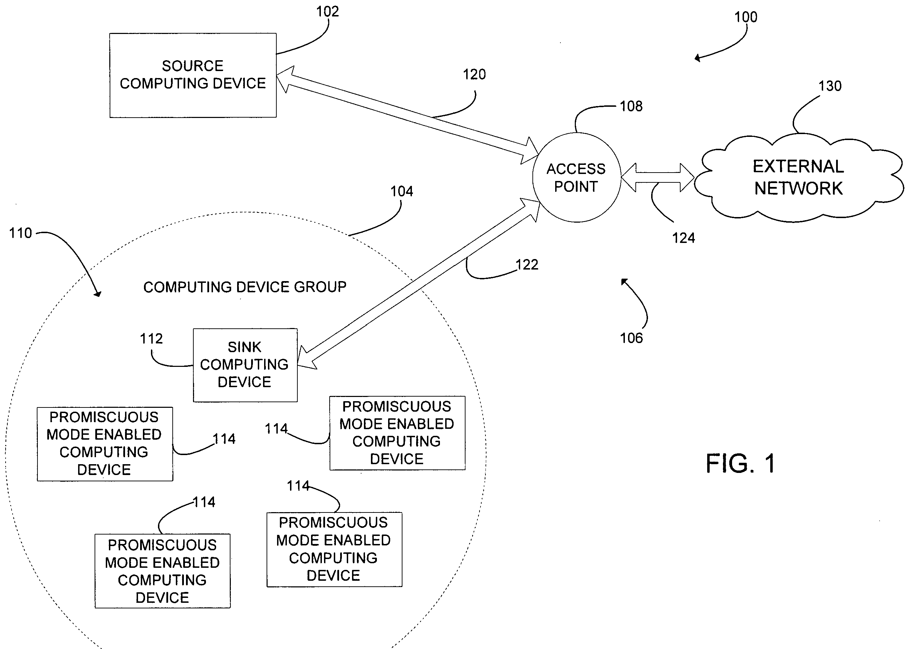

Referring now to FIG. 1, a system 100 for facilitating one-to-many data transmissions to a plurality of computing devices includes a source or server computing device 102 and a receiving or client computing device group 104. The computing devices 102, 104 are communicatively coupled to each other over a network 106 via an access point 108. The source computing device 102 may be embodied as any type of computing device capable of performing the functions described herein. For example, in some embodiments, the source computing device 102 may be embodied as a desktop computer, a laptop computer, a mobile internet device (MID), or other network-enabled computing device.

The computing device group 104 includes a plurality of computing devices 110. One of the computing devices 110 is selected as a sink computing device 112 to receive unicast data transmissions from the source computing device 102. As discussed in more detail below, the sink computing device 112 may be selected randomly or selected based on some criteria such as a signal quality measurement. The remaining computing devices 110 (i.e., the non-selected computing devices 114) are configured in a promiscuous communication mode such that the unicast transmissions addressed to the sink computing device 112 are also received and processed by each non-selected, promiscuous-mode-enabled computing device 114. In this way, one-to-many data transmissions are effected via a unicast data transmission from the source computing device 102 to the sink computing device 112.

Similar to the source computing device 102, each of the computing devices 110 may be embodied as any type of computing device capable of performing the functions described herein. For example, each of the computing devices 110 may be embodied as a desktop computer, a laptop computer, a mobile internet device (MID), or other network-enabled computing device.

The access point 108 facilitates communication between the computing devices 102, 110. The access point 108 may be embodied as any type of wired or wireless network communication routing devices such as a wired or wireless router, switch, hub, or other network communication device capable of communicatively coupling the computing devices 102, 110. In some embodiments, the access point 108 is also communicatively coupled to an external network 130 via a communication link 124. The network 130 may be embodied as any type of wired and/or wireless network such as a local area network, a wide area network, a publicly available global network (e.g., the Internet), or other network. Similarly, the communication link 124 may be embodied as any type of wired or wireless communication link capable of facilitating communication between the access point 108 and the external network 130 such as, for example, any number of wireless or physical connections, wires, cables, and/or other interconnecting links or paths. Additionally, the network 130 may include any number of additional devices, such as routers, switches, intervening computers, and the like, to facilitate communication between the computing devices 102, 110 and remote computing devices.

In some embodiments, the source computing device 102 and the computing device group 104 are located in a single room or are otherwise local to each other. For example, in one particular embodiment, the system 100 is incorporated in a classroom. In such embodiments, the source computing device 102 may be embodied as the teacher's or instructor's computing device and the computing devices 110 may be embodied as student computing devices. Of course, the system 100 may also be used in other environments or implementations in which one-to-many data transmissions are required.

In use, the source computing device 102 is configured to transmit data such as files, video, images, text, and/or other data to each of the computing devices 110 by transmitting a unicast data transmission to the sink computing device 112. To do so, the source computing device 102 transmits a unicast data transmission 120 to the access point 108. The unicast data transmission 120 is addressed or otherwise directed to the sink computing device 112 and includes a network address, such as a media access device (MAC) address, of the sink computing device 112. In response to receiving the unicast data transmission 120, the access point 108 relays or otherwise transmits a unicast data transmission 122 to the sink computing device 112. The unicast data transmission 122 also includes the network address of the sink computing device 112. However, although the unicast data transmission 122 is addressed to the sink computing device 112, the transmission 122 is also received by each of the other computing devices 114. In a typical network, the computing devices 114 (i.e., the communication circuitry of the computing devices 114) are configured to ignore or otherwise disregard the unicast data transmission 122 because the transmission 122 is not addressed to the particular computing device 114. However, because the other computing devices 114 are configured in a promiscuous communication mode, the computing devices 114 also receive the unicast data transmission, which is filtered and processed by the computing devices 114 as discussed in more detail below.

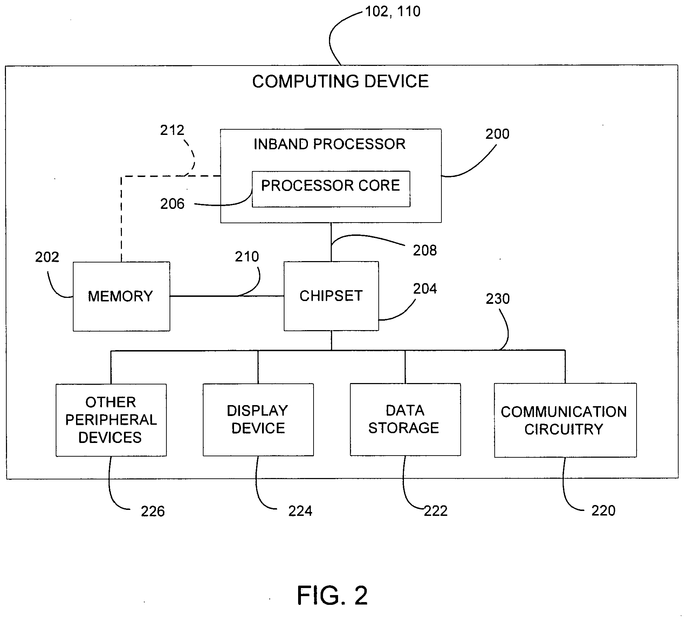

Referring now to FIG. 2, in one embodiment, each of the computing devices 102, 110 includes a processor 200, a chipset 204, and memory 202. The computing devices 102, 110 may be embodied as any type of computing devices capable of performing the respective functions described herein. For example, as discussed above, the computing devices 102, 110 may be embodied as desktop computers, laptop computers, mobile internet devices (MID), or other network-enabled computing devices.

The processor 200 is illustratively embodied as a single core processor having a processor core 206. However, in other embodiments, the processor 200 may be embodied as a multi-core processor having multiple processor cores 206. Additionally, the computing devices 102, 110 may include additional processors 200 having one or more processor cores 206. The processor 200 is communicatively coupled to the chipset 204 via a number of signal paths 208. The signal paths 208 may be embodied as any type of signal paths capable of facilitating communication between the processor 200 and the chipset 204. For example, the signal paths 208 may be embodied as any number of bus paths, printed circuit board traces, wires, vias, intervening devices, and/or other interconnects.

The memory 202 may be embodied as one or more memory devices or data storage locations including, for example, dynamic random access memory devices (DRAM), synchronous dynamic random access memory devices (SDRAM), double-data rate synchronous dynamic random access memory device (DDR SDRAM), and/or other volatile memory devices. Additionally, although only a single memory device 202 is illustrated in FIG. 2, in other embodiments, the computing devices 102, 110 may include additional memory devices.

The chipset 204 may include a memory controller hub (MCH) or northbridge, an input/output controller hub (ICH) or southbridge, and a firmware device. In such embodiments, the firmware device may be embodied as a memory storage device for storing Basic Input/Output System (BIOS) data and/or instructions and/or other information. The chipset 204 is communicatively coupled to the memory 202 via a number of signal paths 210. Similar to the signal paths 208, the signal paths 210 may be embodied as any type of signal paths capable of facilitating communication between the chipset 204 and the memory device 202 such as, for example, any number of bus paths, printed circuit board traces, wires, vias, intervening devices, and/or other interconnects.

In other embodiments, the chipset 204 may be embodied as a platform controller hub (PCH). In such embodiments, the memory controller hub (MCH) may be incorporated in or otherwise associated with the processor 200. Additionally, in such embodiments, the memory device 202 may be communicatively coupled to the processor 200, rather than the chipset 204 (i.e., rather than the platform controller hub), via a number of signal paths 212. Similar to the signal paths 208, the signal paths 212 may be embodied as any type of signal paths capable of facilitating communication between the memory device 202 and the processor 200 such as, for example, any number of bus paths, printed circuit board traces, wires, vias, intervening devices, and/or other interconnects.

The computing devices 102, 110 also include communication circuitry 220 for communicating with each other over the network 106. The communication circuitry 220 may be embodied as any number of devices and circuitry for enabling communications between the computing devices 102, 110. For example, the communication circuitry 220 may be embodied as one or more wired or wireless network interface cards (NICs) or other network communication cards, modules, or circuits for communicating with other computing devices 102, 110 via the access point 108. In regard to the computing devices 110, the communication circuitry 220 includes the capability of enabling a promiscuous communication mode in which each data transmission or packet received over the network 106 (e.g., from the access point 108) is passed to the processor 200 for filtering or processing regardless of the network address associated with the received data packet/transmission. For example, when the promiscuous-mode-enabled computing devices 114 receive the unicast data transmission, which includes the MAC address of the sink computing device 112, the communication circuitry 220 of the devices 114 pass the data transmission to the processor 200 even though the received data transmission includes the MAC address of the sink computing device 112 rather than the MAC address of the respective computing device 114.

The computing devices 102, 110 may also include additional peripheral devices such as a data storage 222, a display device 224, and other peripheral devices 226. Each of the communication circuitry 220, the data storage 222, the display device 224, and other peripheral devices 226 is communicatively coupled to the chipset 204 via signal paths 230. Again, similar to the signal paths 208, the signal paths 230 may be embodied as any type of signal paths capable of facilitating communication between the chipset 204 and the communication circuitry 220, the data storage 222, the display device 224, and other peripheral devices 226 such as, for example, any number of bus paths, printed circuit board traces, wires, vias, intervening devices, and/or other interconnects.

The data storage device(s) 222 may be embodied as any type of devices configured for the short-term or long-term storage of data such as, for example, memory devices and circuits, memory cards, hard disk drives, solid-state drive, or other data storage devices. The display device 224 may be embodied as any type of display device for displaying data to a user of the computing devices 102, 110 such as, for example, a liquid crystal display (LCD), a cathode-ray tube (CRT) display, a light emitting diode (LED) display, or other display device. The peripheral devices 226 may include any number of additional peripheral devices including input devices, output devices, and other interface devices. For example, the peripheral devices 226 may include a keyboard and/or mouse for supplying an input to the computing device 102, 110. The particular number and type of devices included in the peripheral devices 226 may depend upon, for example, the intended use of the computing device 102, 110.

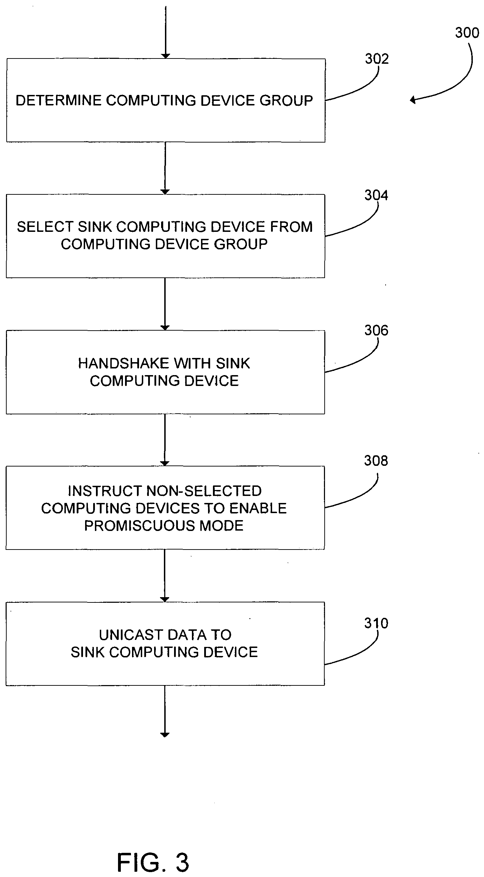

Referring now to FIG. 3, a method 300 for transmitting data to a plurality of computing devices may be executed by the source computing device 102. The method 300 begins with block 302 in which the computing device group 104 is determined by the source computing device 102. To do so, each of the computing devices 110 may register with the computing device 102 such that the source computing device 102 has access to the network address (e.g., the MAC address) of each computing device 110. Such registration may be performed manually or automatically. For example, in some embodiments, the network addresses of the computing devices 110 may be manually inputted into the source computing device 102 and stored therein (e.g., in memory 202 and/or data storage 222). Alternatively, the source computing device 102 may interrogate or otherwise request each computing device 110 to transmit its network address to the source computing device 102. Regardless, each of the computing devices 110 is registered with the source computing device 102 in block 302.

In block 304, the source computing device 102 selects one of the computing devices 110 as the sink computing device 112. As discussed above, the sink computing device 112 is the selected computing device to which the source computing device 102 will direct unicast data transmissions. That is, as discussed below, the source computing device 102 transmits unicast data transmissions including the MAC address of the sink computing device 112. Such unicast data transmissions are received by each of the computing devices 110.

The source computing device 102 may select the sink computing device 112 from the computing devices 110 using any suitable method or algorithm. For example, in one embodiment, the source computing device 102 may randomly select the sink computing device 112 from the computing devices 110 using a suitable random generating algorithm. Alternatively, the source computing device 102 may select the sink computing device 112 based on some criteria or data associated with each computing device 110. For example, in one embodiment, the source computing device 102 is configured to select the sink computing device 112 from the computing devices 110 based on a received signal strength indication (RSSI) measurement of each computing device 110, a signal-to-noise ratio (SNR) measurement of each computing device 110, or some other measurement related to communication quality or the like. In such embodiments, the computing devices 110 may be configured to transmit such measurement criteria to the source computing device during registration of the computing device group in block 302. Alternatively, such measurements may be determined manually for each computing device 110. In such embodiments, the sink computing device 112 may be manually selected based on such measurements.

In one particular embodiment, the computing device 110 having the lowest or worst RSSI, SNR, or other signal measurement is selected as the sink computing device 112 to increase the occurrence of retransmission requests due to receiving errors by the sink computing device 112. It should be appreciated that by increasing the occurrence of retransmissions of data, the likelihood that each computing device 110 receives a complete set of data packets, segments, or blocks is increased.

The source computing device 102 may select the sink computing device 112 once or multiple times. For example, in some embodiments, the source computing device 102 may be configured to reselect the sink computing device 112 for every computing session or periodically (e.g., hourly, daily, weekly, etcetera). Additionally, in some embodiments, the source computing device 102 may be configured to reselect the sink computing device 112 from the computing devices 110 based on some criteria or measurement. For example, the source computing device 102 may reselect a sink computing device 112 when the RSSI, SNR, or other signal measurement increases above some predetermined threshold; when the rate of retransmission requests received from the sink computing device 112 decreases below some predetermined threshold; or the like. In this way, the source computing device 102 may ensure that the computing device 110 having the lowest, or one of the lowest, RSSI, SNR or other signal measurement is selected as the sink computing device 112.

In block 306, the source computing device 102 handshakes with the selected sink computing device 112. For example, the source computing device 102 may notify the sink computing device 112 that it has been selected as the sink computing device 112. In response, the sink computing device 112 may perform one or more configuration steps based on being selected as the sink computing device 112. In block 308, the source computing device 102 instructs each of the other computing devices 114 to enable promiscuous communication mode. Additionally, in block 308, the source computing device 102 may inform the computing devices 114 which computing device 110 has been selected as the sink computing device 112. For example, the source computing device 102 may provide the MAC address of the sink computing device 112 to each non-selected computing device 114.

Subsequently, in block 310, the source computing device 102 begins transmitting and/or retransmitting data to the computing devices 110 as required to effect the transfer of the desired data. To do so, the source computing device 102 transmits a unicast data transmission to the sink computing device 112. As discussed above, the unicast data transmission includes the MAC address of the sink computing device 112. However, because each of the computing devices 114 have a promiscuous communications mode enabled, the unicast data transmission is received and processed by each computing device 114 in addition to the sink computing device 112. In this way, the source computing device 102 is able to transmit data in a one-to-many manner to the computing device group 104.

In block 310, the source computing device 102 may use any suitable transmission protocol to transmit data to the computing device group 104. In one particular embodiment, the unicast data transmission is embodied as a User Datagram Protocol (UDP) unicast data transmission. It should be appreciated that UDP transmissions typically have lower protocol overhead relative to other transmission protocols such as Transmission Control Protocol (TCP). Additionally, the lack of acknowledgement requirement of the receiving computing devices 110 when using UDP may reduce the overall traffic across the network 106 and the number of transmission errors. However, in other embodiments, other communication protocols, including TCP, may be used. Additionally, in some embodiment, the source computing device 102 and/or access point 108 are configured to transmit data packets having a size equal to the Maximum Segment Size (MSS) of the chosen communication protocol (i.e., UDP, TCP, etc.) to further reduce the overall traffic across the network 106.

In the embodiment of FIG. 1, the source computing device 102 transmits the unicast data transmissions to the sink computing device 112 by first transmitting a unicast data transmission 120 to the access point 108 as discussed above. In response, the access point 108 relays or otherwise transmits a unicast data transmission 122 to the sink computing device 112, which is also received by the promiscuous-mode-enabled computing devices 114. In such embodiments, the source computing device 102 and/or access point 108 may or may not be configured to utilize an encryption algorithm for data transmission. For example, in some embodiments, the computing devices 102, 110 and access point 108 are configured to utilize a Wired Equivalency Privacy (WEP) encryption algorithm. In such embodiments, shared key authentication or an open system authentication may be used. However, in other embodiments, no encryption algorithm is used by the computing devices 102, 110, and access point 108.

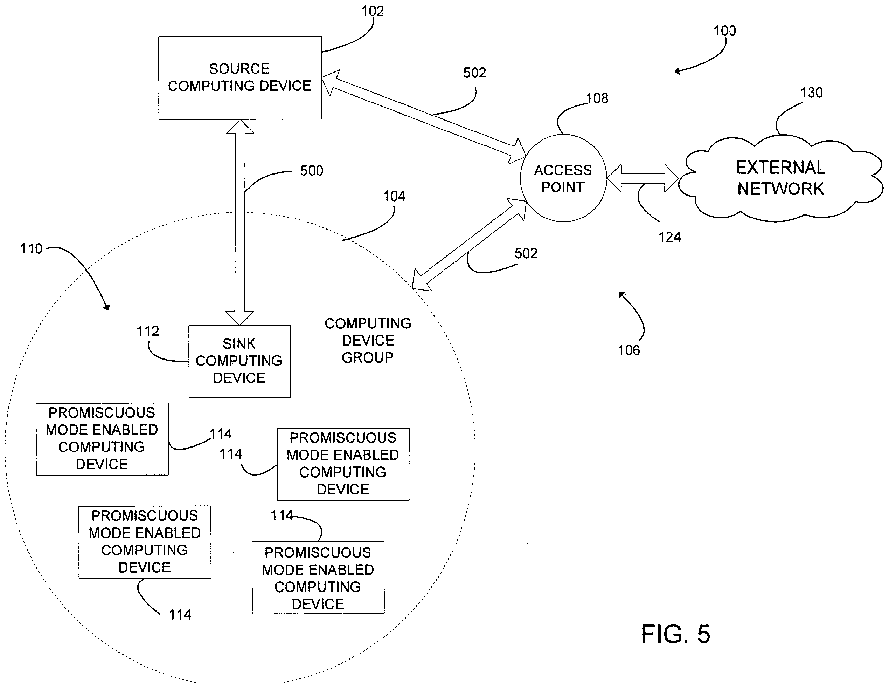

Alternatively, in other embodiments, the source computing device 102 may be configured to transmit a directed-communication unicast data transmission directly to the sink computing device 112, bypassing the access point 108. For example, as illustrated in FIG. 5, the source computing device 102 transmits a directed-communication unicast data transmission 500 directly to the sink computing device 112. To do so, the source computing device 102 and sink computing device 112 establish a virtual interface during the handshaking of block 306. As in the embodiment of FIG. 1, the computing devices 114 have a promiscuous communication mode enabled and, as such, receive and process the directed-communication unicast data transmission 500. In such embodiments, the source computing device 102 and computing devices 110 may or may not use an encryption algorithm for the directed communication data transmission. For example, the directed-communication, unicast data transmission 500 may or may not be encrypted utilizing a WEP encryption algorithm.

In the embodiment of FIG. 5, however, the source computing device 102 and/or computing devices 110 may utilize more advanced encryption algorithms when communicating with the access point 108 and, thereby, the external network 130. For example, in one embodiment, the source computing device 102 and the computing devices 110 may communicate with the access point 108 via communication links 502, which may be encrypted using a Wi-Fi Protected Access (WPA) or a Wi-Fi Protected Access 2 (WPA2) encryption algorithm, both of which are well-known in the art. In this way, the source computing device 102 and the computing devices 110 may communicate with each other using a WEP or no encryption algorithm, while communicating with the access point 108 using a WPA or WPA2 encryption algorithm.

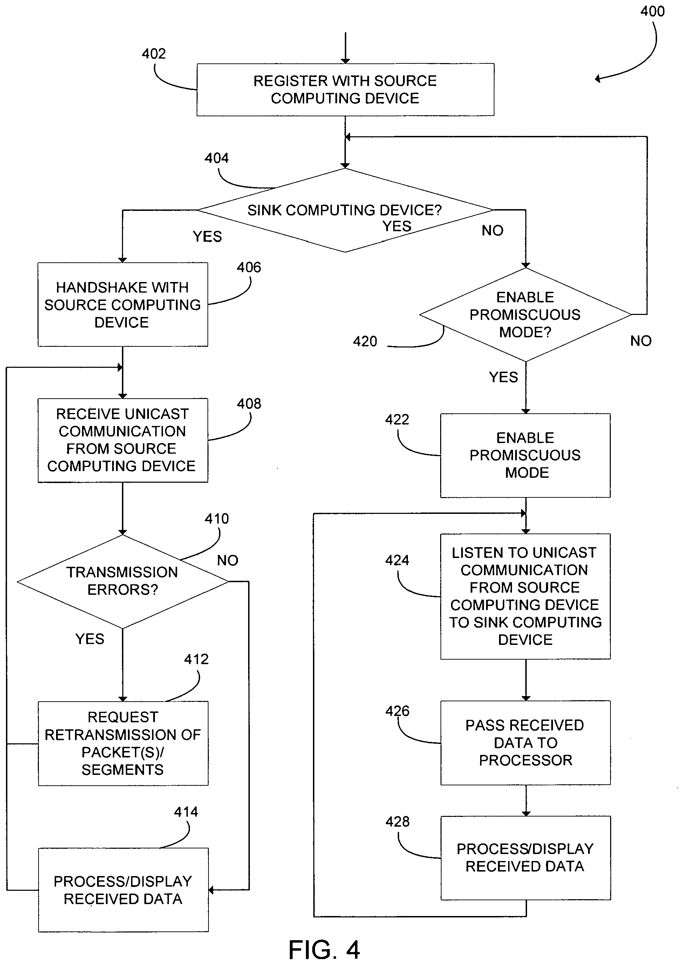

Referring now to FIG. 4, a method 400 for receiving data from a source computing device 102 may be executed by each computing device 110. The method 400 begins with block 402 in which the computing device 110 registers with the source computing device 102. As discussed above in regard to FIG. 3, the computing device 110 may register with the source computing device 102 manually or automatically such that the source computing device 102 has access to the network address of the computing device 110. For example, in one particular embodiment, the computing device 110 transmits its network address to the source computing device 102 in response to an interrogation request received from the source computing device 102.

In block 404, the computing device 110 determines whether the device 110 has been selected as the sink computing device 112. As discussed above, the source computing device 102 selects the sink computing device 112 using a random or criteria-based selection method and subsequently notifies the computing device 110 that it has been selected as the sink computing device 112. Additionally, the source computing device 102 may notify the other devices 114 that they have not been selected. As such, in some embodiments, the computing device 110 receives a notification from the source computing device that it has or has not been selected as the sink computing device 112 in block 404.

If the computing device 110 has been selected as the sink computing device 112, the computing device 110 handshakes with the source computing device 102 in block 406. The computing device 110 may perform one or more configuration steps, interface with the source computing device 102, and/or otherwise setup communication protocol details with the source computing device 102 in block 406. For example, in the embodiment illustrated in FIG. 5, the source computing device 102 and the computing device 110 (i.e., the sink computing device 112) establish a virtual interface between the devices 102, 110 in block 406.

Subsequently, in block 408, the computing device 110 begins receiving unicast data transmissions from the source computing device 102. As discussed above, the unicast data transmissions include the network address (e.g., the MAC address) of the computing device 110 (i.e., the sink computing device 112). Depending on the particular embodiment, the unicast data transmission may be received from the access point 108 or be embodied as a directed-communication received directly from the source computing device 102.

In block 410, the computing device 110 determines whether any transmission errors have occurred. The computing device 110 may determine such errors after receiving each data packet, block, or segment; periodically; or upon receiving a predetermined number of data packets, block, or segments. In some embodiments, the computing device 110 may be configured to send an acknowledgement to the source computing device 102 upon receiving each data packet or block. As such, the error determination may be performed by the computing device 110 in some embodiments and/or the source computing device 102 in other embodiments.

If the computing device 110 determines that one or more errors have occurred in block 410, the computing device 110 notifies the source computing device 102 of the error in block 412. To do so, the computing device 110 may send a retransmission request for the data packet or other data to the source computing device 102 in block 412. Alternatively, in embodiments wherein the error detection is performed by the source computing device 102, the computing device 110 may be configured to not send an acknowledgement transmission in block 412 such that the computing device 102 determines that a transmission error has occurred and will retransmit the missing or corrupted data packet.

If no transmission error has occurred, the computing device 110 processes the unicast data transmission in block 414. For example, the computing device 110 may filter the unicast data transmission, pass the unicast data transmission to the processor 200, store the unicast data transmission, reconstruct the data file formed from multiple data packets or segments, display the data to a user of the device 110, and/or otherwise process the unicast data transmission depending on the particular application and/or state of the computing device 110. Regardless, the method 400 loops back to block 408 in which the computing device 110 receives additional unicast data transmissions from the source computing device 102.

Referring back to block 404, if the computing device 110 is notified or otherwise determines that the device 110 has not been selected as the sink computing device 112, the computing device 110 (i.e., computing device 114) determines whether the device 110 should enable a promiscuous communications mode in block 420. As discussed above, the source computing device 102 may transmit instructions to the computing device 110 to enable the promiscuous mode in block 420. Alternatively, the promiscuous communications mode may be enabled manually on the computing device 110. Regardless, if the computing device 110 has been instructed to enable promiscuous mode, the communication circuitry 220 of the computing device 110 is configured in promiscuous communications mode in block 422.

In block 424, the computing device 110 begins "listening" to the unicast data transmissions sent from the source computing device 102 to the sink computing device 112. As discussed above, such unicast data transmissions are received by each of the promiscuous-mode-enabled computing devices 114. Typically, a computing device will disregard or otherwise "dump" data packets or segments that are not addressed to the particular computing device (i.e., does not have the MAC address of the communication circuitry included in the computing device). However, because the computing device 110 has enabled promiscuous communications mode, every unicast data transmission received by the computing device 110 is passed to the processor 200 for processing in block 426.

Subsequently, in block 428, such unicast data transmission or data contained therein is processed. As discussed above in regard to the sink computing device 112, the computing device 110 (i.e., computing device 114) may filter the unicast data transmission, pass the unicast data transmission to the processor 200, store the unicast data transmission, reconstruct the data file formed from multiple data packets or segments, display the data to a user of the device 110, and/or otherwise process the unicast data transmission depending on the particular application and/or state of the computing device 110 in block 428. For example, in some embodiments, software filters may be used by the processor 200 of the computing device 110 to filter or otherwise process the unicast data transmission. In one particular embodiment, Berkeley Packet Filters (BPFs), which are filters well-known in the art, are used to provide a raw interface to the data link layer of the communication packets/segments and low level filtering of the data frames/packets of the unicast data transmission. It should be appreciated that such filtering may reduce the processing load on the processor 200. The method 400 subsequently loops back to block 424 in which the computing device 110 continues to "listen" for additional unicast data transmissions from the source computing device 102.

while the disclosure has been illustrated and described in detail in the drawings and foregoing description, such an illustration and description is to be considered as exemplary and not restrictive in character, it being understood that only illustrative embodiments have been shown and described and that all changes and modifications that come within the scope of the claims are desired to be protected.

## Claims

1. A method for use in a computing system comprising:
registering (302) a plurality of computing devices with a source computing device (102)and receiving, from each computing device by the source computing device, a signal measurement of the corresponding computing device that is indicative of a communication quality of received communications by the corresponding computing device;
comparing, by the source computing device, the signal measurements received from the plurality of computing devices;
selecting (304), by the source computing device, a first computing device (112) of the plurality of computing devices having the lowest signal measure to which to transmit a unicast data transmission, the plurality of computing devices including the selected first computing device and at least one non-selected computing device (114);
transmitting (308) instructions to each non-selected computing device (114) to enable a promiscuous communications mode in each non-selected computing device;
transmitting (310) the unicast data transmission from the source computing device (102);
receiving the unicast data transmission with each computing device of the plurality of computing devices; and
passing the received unicast data transmission to a processor (200) of each computing device of the plurality of computing devices.

2. The method of claim 1, wherein selecting the first computing device (112) comprises selecting the first computing device from the plurality of computing devices based on a Received Signal Strength Indication, RSSI, measurement of each computing device of the plurality of computing devices, in particular wherein selecting the first computing device comprising receiving, with the source computing device (102), RSSI measurement values from each computing device of the plurality of computing devices and selecting the first computing device based on the lowest RSSI measurement.

3. The method of claim 1, wherein enabling the promiscuous communications mode comprises transmitting instructions to each non-selected computing device (114) to enable promiscuous communications mode on communication circuitry of the respective non-selected computing device (114).

4. The method of claim 1, wherein transmitting the unicast data transmission comprises:
transmitting the unicast data transmission from the source computing device (102) to an access point (108); and
transmitting the unicast data transmission form the access point (108) to the first computing device (112).

5. The method of claim 1, wherein transmitting the unicast data transmission comprising transmitting the unicast data transmission using a Wired Equivalency Protocol, WEP, encryption algorithm or wherein transmitting the unicast data transmission comprises transmitting a User Datagram Protocol , UDP, unicast data transmission.

6. The method of claim 1, further comprising:
establishing a virtual interface between the source computing device (102) and the first computing device (112), and
wherein transmitting the unicast data transmission comprises transmitting a directed communication unicast data transmission from the source computing device (102) directly to the first computing device (112) in particular further comprising:
transmitting another unicast data transmission from the source computing device (102) to an access point (108),
wherein the directed communication unicast data transmission uses one of (i) no encryption algorithm or (ii) a Wired Equivalency Protocol, WEP, encryption algorithm, and
wherein the another unicast data transmission uses one of (i) a Wi-Fi Protected Access, WPA, encryption algorithm or (ii) a Wi-Fi Protected Access 2, WPA2, encryption algorithm.

7. The method of claim 1, wherein:
receiving the unicast data transmission comprises receiving the unicast data transmission with communication circuitry of each computing device of the plurality of computing devices, and
passing the received unicast data transmission comprises passing the received unicast data transmission from the communication circuitry to the processor of each computing device of the plurality of computing devices, in particular wherein passing the received unicast data transmission comprises passing the unicast data transmission on each computing device, except for the first computing device (112), of the plurality of computing devices from the communication circuitry to the processor regardless of a Media Access Control, MAC, address included in the unicast data transmission.

8. The method of claim 1, wherein receiving the unicast data transmission comprises receiving, with each computing device of the plurality of computing devices, a unicast data transmission that is retransmitted by the source computing device (102) in response to errors in receiving a previously transmitted unicast data transmission reported by the first computing device (112).

9. The method of claim 1, wherein transmitting the unicast data transmission comprises transmitting a wireless unicast data transmission from a source computing device (102) to the first computing device (112).

10. A computing system comprising:
a plurality of computing devices including a first computing device (112) and at least one second computing device, the at least one second computing device having a processor and a communication circuit, the communication circuit having a promiscuous-mode-enabled, wherein each computing device of the plurality of computing devices is to register with a source computing device (102) and to transmit a signal measurement of the corresponding computing device to the source computing device, wherein each signal measurement is indicative of a communication quality of received communications by the corresponding computing device; and
a source computing device to (i) compare the signal measurements received from the plurality of computing devices, (ii) select the first computing device from the plurality of computing devices that has the lowest signal measurement based on the comparison of the signal measurements, and (iii) transmit data to each computing device of the plurality of computing devices by transmitting a unicast data transmission including a Media Access Control, MAC, address of the first computing device,
wherein, in response to receiving the unicast data transmission, the at least one second computing device passes the unicast data transmission from the promiscuous communication circuit to the processor.

11. The computing system of claim 10, wherein the source computing device is configured to select the first computing device (112) from the plurality of computing devices based on a Received Signal Strength Indication, RSSI, measurement of each computing device of the plurality of computing devices.

12. The computing system of claim 10, wherein the source computing device (102) is configured to transmit instructions to the at least one second computing device to cause the associated communication circuit to enable promiscuous mode.

13. The computing device of claim 10, wherein the source computing device (102) is configured to transmit data to each computing device of the plurality of computing devices by transmitting a directed communication unicast data transmission directly to the first computing device.

14. A machine readable medium comprising a plurality of instructions that, in response to being executed, cause a source computing device to carry out all the steps of the method according to any one of the claims 1 to 9.

## Patentansprüche

1. Verfahren zur Verwendung in einem Datenverarbeitungssystem, Folgendes umfassend:
Registrieren (302) mehrerer Datenverarbeitungsvorrichtungen an einer Quell-Datenverarbeitungsvorrichtung (102) und Empfangen, aus jeder Datenverarbeitungsvorrichtung durch die Quell-Datenverarbeitungsvorrichtung, einer Signalmessung der entsprechenden Datenverarbeitungsvorrichtung, welche für eine Kommunikationsqualität der empfangenen Kommunikation durch die entsprechende Datenverarbeitungsvorrichtung bezeichnend ist;
Vergleichen, durch die Quell-Datenverarbeitungsvorrichtung, der Signalmessungen, welche aus den mehreren Datenverarbeitungsvorrichtungen empfangen werden;
Auswählen (304), durch die Quell-Datenverarbeitungsvorrichtung, einer ersten Datenverarbeitungsvorrichtung (112) der mehreren Datenverarbeitungsvorrichtungen mit dem niedrigsten Signalmesswert, an welche eine Unicast-Datenübertragung übertragen wird, wobei die mehreren Datenverarbeitungsvorrichtungen die ausgewählte erste Datenverarbeitungsvorrichtung und mindestens eine nicht ausgewählte Datenverarbeitungsvorrichtung (114) umfassen;
Übertragen (308) von Anweisungen an jede nicht ausgewählte Datenverarbeitungsvorrichtung (114), um einen promiskuitiven Kommunikationsmodus in jeder nicht ausgewählten Datenverarbeitungsvorrichtung zu ermöglichen;
Übertragen (310) der Unicast-Datenübertragung aus der Quell-Datenverarbeitungsvorrichtung (102);
Empfangen der Unicast-Datenübertragung an jeder Datenverarbeitungsvorrichtung der mehreren Datenverarbeitungsvorrichtungen; und
Weitergeben der empfangenen Unicast-Datenübertragung an einen Prozessor (200) jeder Datenverarbeitungsvorrichtung der mehreren Datenverarbeitungsvorrichtungen.

2. Verfahren nach Anspruch 1, wobei Auswählen der ersten Datenverarbeitungsvorrichtung (112) ein Auswählen der ersten Datenverarbeitungsvorrichtung aus den mehreren Datenverarbeitungsvorrichtungen auf der Grundlage einer RSSI-Messung (RSSI: Received Signal Strength Indication) jeder Datenverarbeitungsvorrichtung der mehreren Datenverarbeitungsvorrichtungen umfasst, wobei im Einzelnen ein Auswählen der ersten Datenverarbeitungsvorrichtung ein Empfangen, mit der Quell-Datenverarbeitungsvorrichtung (102), von RSSI-Messwerten aus jeder Datenverarbeitungsvorrichtung der mehreren Datenverarbeitungsvorrichtungen und ein Auswählen der ersten Datenverarbeitungsvorrichtung auf der Grundlage der niedrigsten RSSI-Messung umfasst.

3. Verfahren nach Anspruch 1, wobei Ermöglichen des promiskuitiven Kommunikationsmodus ein Übertragen von Anweisungen an jede nicht ausgewählte Datenverarbeitungsvorrichtung (114) umfasst, um einen promiskuitiven Kommunikationsmodus auf Kommunikationsschaltkreisen der jeweiligen nicht ausgewählten Datenverarbeitungsvorrichtung (114) zu ermöglichen.

4. Verfahren nach Anspruch 1, wobei Übertragen der Unicast-Datenübertragung Folgendes umfasst:
Übertragen der Unicast-Datenübertragung aus der Quell-Datenverarbeitungsvorrichtung (102) an einen Zugangspunkt (108); und
Übertragen der Unicast-Datenübertragung aus dem Zugangspunkt (108) an die erste Datenverarbeitungsvorrichtung (112).

5. Verfahren nach Anspruch 1, wobei Übertragen der Unicast-Datenübertragung ein Übertragen der Unicast-Datenübertragung unter Verwendung eines WEP-Verschlüsselungsalgorithmus (WEP: Wired Equivalency Protocol) umfasst oder wobei Übertragen der Unicast-Datenübertragung ein Übertragen einer UDP-Unicast-Datenübertragung (UDP: User Datagram Protocol) umfasst.

6. Verfahren nach Anspruch 1, weiterhin Folgendes umfassend:
Herstellen einer virtuellen Schnittstelle zwischen der Quell-Datenverarbeitungsvorrichtung (102) und der ersten Datenverarbeitungsvorrichtung (112), und
wobei Übertragen der Unicast-Datenübertragung ein Übertragen einer Unicast-Datenübertragung mit gerichteter Kommunikation aus der Quell-Datenverarbeitungsvorrichtung (102) unmittelbar an die erste Datenverarbeitungsvorrichtung (112) umfasst, im Einzelnen weiterhin Folgendes umfassend:
Übertragen einer anderen Unicast-Datenübertragung aus der Quell-Datenverarbeitungsvorrichtung (102) an einen Zugangspunkt (108),
wobei die Unicast-Datenübertragung mit gerichteter Kommunikation entweder (i) keinen Verschlüsselungsalgorithmus oder (ii) einen WEP-Verschlüsselungsalgorithmus (WEP: Wired Equivalency Protocol) verwendet und
wobei die andere Unicast-Datenübertragung entweder (i) einen WPA-Verschlüsselungsalgorithmus (WPA: Wi-Fi Protected Access) oder (ii) einen WPA2-Verschlüsselungsalgorithmus, Wi-Fi Protected Access 2, verwendet.

7. Verfahren nach Anspruch 1, wobei:
Empfangen der Unicast-Datenübertragung ein Empfangen der Unicast-Datenübertragung mit Kommunikationsschaltkreisen jeder Datenverarbeitungsvorrichtung der mehreren Datenverarbeitungsvorrichtungen umfasst, und
Weitergeben der empfangenen Unicast-Datenübertragung ein Weitergeben der empfangenen Unicast-Datenübertragung aus den Kommunikationsschaltkreisen an den Prozessor jeder Datenverarbeitungsvorrichtung der mehreren Datenverarbeitungsvorrichtungen umfasst, wobei im Einzelnen Weitergeben der empfangenen Unicast-Datenübertragung ein Weitergeben der Unicast-Datenübertragung auf jeder Datenverarbeitungsvorrichtung, außer auf der ersten Datenverarbeitungsvorrichtung (112), der mehreren Datenverarbeitungsvorrichtungen aus den Kommunikationsschaltkreisen an den Prozessor ungeachtet einer MAC-Adresse (MAC: Media Access Control) umfasst, welche in der Unicast-Datenübertragung enthalten ist.

8. Verfahren nach Anspruch 1, wobei Empfangen der Unicast-Datenübertragung ein Empfangen, mit jeder Datenverarbeitungsvorrichtung der mehreren Datenverarbeitungsvorrichtungen, einer Unicast-Datenübertragung umfasst, welche durch die Quell-Datenverarbeitungsvorrichtung (102) als Reaktion auf Fehler beim Empfangen einer zuvor übertragenen Unicast-Datenübertragung, welche durch die erste Datenverarbeitungsvorrichtung (112) berichtet werden, erneut übertragen wird.

9. Verfahren nach Anspruch 1, wobei Übertragen der Unicast-Datenübertragung ein Übertragen einer drahtlosen Unicast-Datenübertragung aus einer Quell-Datenverarbeitungsvorrichtung (102) an die erste Datenverarbeitungsvorrichtung (112) umfasst.

10. Datenverarbeitungssystem, Folgendes umfassend:
mehrere Datenverarbeitungsvorrichtungen, welche eine erste Datenverarbeitungsvorrichtung (112) und mindestens eine zweite Datenverarbeitungsvorrichtung umfassen, wobei die mindestens eine zweite Datenverarbeitungsvorrichtung einen Prozessor und einen Kommunikationsschaltkreis aufweist, wobei der Kommunikationsschaltkreis einen aktivierten promiskuitiven Modus aufweist, wobei jede Datenverarbeitungsvorrichtung der mehreren Datenverarbeitungsvorrichtungen sich an einer Quell-Datenverarbeitungsvorrichtung (102) registrieren und eine Signalmessung der entsprechenden Datenverarbeitungsvorrichtung an die Quell-Datenverarbeitungsvorrichtung übertragen muss, wobei jede Signalmessung für eine Kommunikationsqualität der durch die entsprechende Datenverarbeitungsvorrichtung empfangenen Kommunikation bezeichnend ist; und
eine Quell-Datenverarbeitungsvorrichtung, die (i) die Signalmessungen, welche aus den mehreren Datenverarbeitungsvorrichtungen empfangen werden, vergleicht, (ii) die erste Datenverarbeitungsvorrichtung aus den mehreren Datenverarbeitungsvorrichtungen auswählt, welche den niedrigsten Signalmesswert auf der Grundlage des Vergleichs der Signalmessungen aufweist, und (iii) Daten an jede Datenverarbeitungsvorrichtung der mehreren Datenverarbeitungsvorrichtungen durch Übertragen einer Unicast-Datenübertragung überträgt, welche eine MAC-Adresse, Media Access Control, der ersten Datenverarbeitungsvorrichtung umfasst,
wobei, als Reaktion auf Empfangen der Unicast-Datenübertragung, die mindestens eine zweite Datenverarbeitungsvorrichtung die Unicast-Datenübertragung aus dem promiskuitiven Kommunikationsschaltkreis an den Prozessor weitergibt.

11. Datenverarbeitungssystem nach Anspruch 10, wobei die Quell-Datenverarbeitungsvorrichtung konfiguriert ist, die erste Datenverarbeitungsvorrichtung (112) aus den mehreren Datenverarbeitungsvorrichtungen auf der Grundlage einer RSSI-Messung (RSSI: Received Signal Strength Indication) jeder Datenverarbeitungsvorrichtung der mehreren Datenverarbeitungsvorrichtungen auszuwählen.

12. Datenverarbeitungssystem nach Anspruch 10, wobei die Quell-Datenverarbeitungsvorrichtung (102) konfiguriert ist, Anweisungen an die mindestens eine zweite Datenverarbeitungsvorrichtung zu übertragen, um zu bewirken, dass der dazugehörige Kommunikationsschaltkreis einen promiskuitiven Modus ermöglicht.

13. Datenverarbeitungsvorrichtung nach Anspruch 10, wobei die Quell-Datenverarbeitungsvorrichtung (102) konfiguriert ist, Daten an jede Datenverarbeitungsvorrichtung der mehreren Datenverarbeitungsvorrichtungen durch Übertragen einer Unicast-Datenübertragung mit gerichteter Kommunikation unmittelbar an die erste Datenverarbeitungsvorrichtung zu übertragen.

14. Maschinenlesbares Medium, eine Vielzahl von Anweisungen umfassend, welche, als Reaktion beim Ausgeführtwerden, bewirken, dass eine Quell-Datenverarbeitungsvorrichtung alle Schritte des Verfahrens nach einem der Ansprüche 1 bis 9 ausführt.

## Revendications

1. Procédé destiné à être utilisé dans un système informatique consistant :
à enregistrer (302) une pluralité de dispositifs informatiques avec un dispositif informatique source (102) et à recevoir, de chaque dispositif informatique au moyen du dispositif informatique source, une mesure de signal du dispositif informatique correspondant qui indique une qualité de communication de communications reçues par le dispositif informatique correspondant ;
à comparer, au moyen du dispositif informatique source, les mesures de signal reçues de la pluralité de dispositifs informatiques ;
à sélectionner (304), au moyen du dispositif informatique source, un premier dispositif informatique (112) de la pluralité de dispositifs informatiques ayant la mesure de signal la plus basse auquel il faut transmettre une transmission de données en monodiffusion, la pluralité de dispositifs informatiques comprenant le premier dispositif informatique sélectionné et au moins un dispositif informatique non sélectionné (114) ;
à transmettre (308) des instructions à chaque dispositif informatique non sélectionné (114) pour permettre un mode de communication espion dans chaque dispositif informatique non sélectionné ;
à transmettre (310) la transmission de données en monodiffusion depuis le dispositif informatique source (102) ;
à recevoir la transmission de données en monodiffusion avec chaque dispositif informatique de la pluralité de dispositifs informatiques ; et
à passer la transmission de données en monodiffusion reçue à un processeur (200) de chaque dispositif informatique de la pluralité de dispositifs informatiques.

2. Procédé selon la revendication 1, dans lequel la sélection du premier dispositif informatique (112) consiste à sélectionner le premier dispositif informatique parmi la pluralité de dispositifs informatiques en se basant sur une mesure d'indication de puissance de signal reçue, RSSI, de chaque dispositif informatique de la pluralité de dispositifs informatiques, en particulier dans lequel la sélection du premier dispositif informatique consiste à recevoir, avec le dispositif informatique source (102), des valeurs de mesure d'indication RSSI en provenance de chaque dispositif informatique de la pluralité de dispositifs informatiques et à sélectionner le premier dispositif informatique en se basant sur la mesure d'indication RSSI la plus basse.

3. Procédé selon la revendication 1, dans lequel le fait de permettre le mode de communication espion consiste à transmettre des instructions à chaque dispositif informatique non sélectionné (114) pour permettre un mode de communication espion sur un ensemble de circuits de communication du dispositif informatique non sélectionné (114) respectif.

4. Procédé selon la revendication 1, dans lequel le fait de transmettre la transmission de données en monodiffusion consiste :
à transmettre la transmission de données en monodiffusion depuis le dispositif informatique source (102) vers un point d'accès (108) ; et
à transmettre la transmission de données en monodiffusion depuis le point d'accès (108) vers le premier dispositif informatique (112).

5. Procédé selon la revendication 1, dans lequel le fait de transmettre la transmission de données en monodiffusion consiste à transmettre la transmission de données en monodiffusion à l'aide d'un algorithme de cryptage de protocole WEP (Wired Equivalency Protocol) ou dans lequel le fait de transmettre la transmission de données en monodiffusion consiste à transmettre une transmission de données en monodiffusion de protocole de datagramme utilisateur, UDP.

6. Procédé selon la revendication 1, consistant en outre :
à établir une interface virtuelle entre le dispositif informatique source (102) et le premier dispositif informatique (112) et
dans lequel le fait de transmettre la transmission de données en monodiffusion consiste à transmettre une transmission de données en monodiffusion de communication dirigée depuis le dispositif informatique source (102) directement vers le premier dispositif informatique (112) en particulier consistant en outre :
à transmettre une autre transmission de données en monodiffusion depuis le dispositif informatique source (102) vers un point d'accès (108),
dans lequel la transmission de données en monodiffusion de communication dirigée utilise soit (i) aucun algorithme de cryptage, soit (ii) un algorithme de cryptage de protocole WEP (Wired Equivalency Protocol) et
dans lequel l'autre transmission de données en monodiffusion utilise soit (i) un algorithme de cryptage d'accès protégé Wi-Fi, WPA, soit (ii) un algorithme de cryptage d'accès protégé Wi-Fi 2, WPA2.

7. Procédé selon la revendication 1, dans lequel :
la réception de la transmission de données en monodiffusion consiste à recevoir la transmission de données en monodiffusion avec un ensemble de circuits de communication de chaque dispositif informatique de la pluralité de dispositifs informatiques et
le passage de la transmission de données en monodiffusion reçue consiste à passer la transmission de données en monodiffusion reçue de l'ensemble de circuits de communication au processeur de chaque dispositif informatique de la pluralité de dispositifs informatiques, en particulier dans lequel le passage de la transmission de données en monodiffusion reçue consiste à passer la transmission de données en monodiffusion sur chaque dispositif informatique, à l'exception du premier dispositif informatique (112), de la pluralité de dispositifs informatiques de l'ensemble de circuits de communication au processeur sans se soucier d'une adresse de contrôle d'accès au support, MAC, incluse dans la transmission de données en monodiffusion.

8. Procédé selon la revendication 1, dans lequel la réception de la transmission de données en monodiffusion consiste à recevoir, avec chaque dispositif informatique de la pluralité de dispositifs informatiques, une transmission de données en monodiffusion qui est retransmise par le dispositif informatique source (102) à la suite d'erreurs lors de la réception d'une transmission de données en monodiffusion transmise auparavant rapportées par le premier dispositif informatique (112) .

9. Procédé selon la revendication 1, dans lequel le fait de transmettre la transmission de données en monodiffusion consiste à transmettre une transmission de données en monodiffusion sans fil depuis un dispositif informatique source (102) au premier dispositif informatique (112).

10. Système informatique comprenant :
une pluralité de dispositifs informatiques comprenant un premier dispositif informatique (112) et au moins un second dispositif informatique, le ou les seconds dispositifs informatiques ayant un processeur et un circuit de communication, le circuit de communication ayant un mode espion autorisé, dans lequel chaque dispositif informatique de la pluralité de dispositifs informatiques doit se faire enregistrer auprès d'un dispositif informatique source (102) et transmettre une mesure de signal du dispositif informatique correspondant au dispositif informatique source, dans lequel chaque mesure de signal indique une qualité de communication de communications reçues par le dispositif informatique correspondant ; et
un dispositif informatique source (i) pour comparer les mesures de signal reçues de la pluralité de dispositifs informatiques, (ii) pour sélectionner le premier dispositif informatique parmi la pluralité de dispositifs informatiques qui présente la mesure de signal la plus basse en se basant sur la comparaison des mesures de signal et (iii) pour transmettre des données à chaque dispositif informatique de la pluralité de dispositifs informatiques en transmettant une transmission de données en monodiffusion comprenant une adresse de contrôle d'accès au support, MAC du premier dispositif informatique,
dans lequel, à la suite de la réception de la transmission de données en monodiffusion, le ou les seconds dispositifs informatiques passent la transmission de données en monodiffusion du circuit de communication espion au processeur.

11. Système informatique selon la revendication 10, dans lequel le dispositif informatique source est configuré pour sélectionner le premier dispositif informatique (112) parmi la pluralité de dispositifs informatiques en se basant sur une mesure d'indication de puissance de signal reçue, RSSI, de chaque dispositif informatique de la pluralité de dispositifs informatiques.

12. Système informatique selon la revendication 10, dans lequel le dispositif informatique source (102) est configuré pour transmettre des instructions au ou aux seconds dispositifs informatiques pour contraindre le circuit de communication associé à permettre un mode espion.

13. Dispositif informatique selon la revendication 10, dans lequel le dispositif informatique source (102) est configuré pour transmettre des données à chaque dispositif informatique de la pluralité de dispositifs informatiques en transmettant une transmission de données en monodiffusion de communication dirigée directement au premier dispositif informatique.

14. Support lisible par une machine comprenant une pluralité d'instructions qui, à la suite de leur exécution, contraignent un dispositif informatique source à réaliser toutes les étapes du procédé selon l'une quelconque des revendications 1 à 9.
